# EUROPEAN PATENT APPLICATION

(11) **EP 1 420 573 A2**
(43) Date of publication of application: **19.05.2004**
(21) Application number: 03026225.7
(22) Date of filing: 14.11.2003
(51) Int. Cl.: H04M 11/00, G08C 17/02, H04B 1/16, B65D 81/38

(54) **A container**

(30) Priority: 15.11.2002 GB 0226702
(71) Applicant: Marchwood Limited, Milton Keynes, MK17 8NN (GB)
(72) Inventor: Rickson, Colin, Milton Keynes, MK17 8NN (GB)
(74) Representative: Raynor, Simon Mark

(57) **Abstract**

A container (1) including a payload volume that, in use, is to maintain at least one environmental condition within the payload volume within a predetermined range of values, a sensor (13) for measuring the environmental condition within the payload volume, and a telecommunications device (19) adapted to transmit data relating to the environmental condition measured by the sensor (13) to a computerised monitoring system via a telecommunications network.
The application also presents a switch device for deactivating a telecommunications device, when located on-board or in close proximity to an aircraft.

## Description

The present invention relates to a container.

Thermally insulated containers are used to transport items that are sensitive to temperature and must therefore be maintained within predetermined temperature ranges. Such items include goods such as vaccines and drugs, human organs for transplant, tissue cultures, chilled and frozen foods and many other products, some of which have an extremely high value and are very sensitive to temperature changes. It is essential that such products are maintained within the appropriate temperature ranges during transportation.

This can, however, be a difficult task. Although such goods are normally transported within highly insulated containers, sometimes with hot or cold "dogs" (heat reservoirs, which may include eutectic materials) to provide additional heating or cooling, heat will still flow into or out of the container, according to the difference between the ambient temperature and the internal temperature of the container. It cannot always be predicted what temperatures will be experienced or how long they will last. If the container is exposed to excessively high or low temperatures for extended periods, the internal temperature may go outside the required range, causing damage to the contents.

A further problem arises in relation to certain live products, such as tissue cultures (for example artificial skin grafts) that are sustained on a nutrient-containing agar. Such products have to be maintained within a fairly narrow temperature range (typically 21-30°C) to survive. However, the rate at which they consume the nutrients in the agar also depends on the temperature, increasing as the temperature rises. Therefore, if the temperature remains at the upper end of the acceptable range, the nutrients will be consumed more quickly than if it is at the lower end of that range. In fact, the nutrients may last twice as long at 21°C than at 30°C. Thus, for maximum life, it is desirable to maintain the temperature as close as possible to the bottom end of the acceptable range, while always staying within that range.

A similar problem arises in relation to certain vaccines, which degrade at a rate that depends on ambient temperature. As the rate of degradation increases with temperature, it is desirable to maintain the temperature as close as possible to the bottom end of the acceptable range (e.g. 2°C to 4°C), while always staying within the range of, for example 2°C to 8°C. In this way, the rate of degradation can be minimised.

One solution to the above-mentioned problems is described in WO 01/02268. That document describes a reusable refrigerated container that can maintain the payload within the specified temperature limits. The container includes sensors and a data logger to record information about the conditions within the payload volume and externally of the container throughout the journey. The data can then be analysed when the container is opened to ensure that the temperature within the container did not at any time exceed or fall below the upper and lower limits respectively of the specified temperature range. If the temperature of the payload volume was outside the specified range at any time during the journey the goods transported may have to be scrapped. This is particularly the case for medicines / vaccines which can be damaged if they are not maintained within the specified temperature range. Subsequent administration of drugs that have been transported outside of their temperature range may either have little or no effect or may actually be harmful to the recipient. Furthermore, such cargo may have an economic value of tens of thousands of pounds.

A drawback to the container described in WO 01/02268 is that the recipient of the container can only confirm retrospectively whether or not the goods were maintained within the specified temperature range when the goods have been received. Thus there is no opportunity for intervening to prevent the temperature within the container from migrating outside the specified temperature range. For example, if the container is lost by the courier, or delayed because of bad weather or lack of available transport, there might not be sufficient refrigerant / cooling means to keep the payload volume cool over the extended journey time.

Accordingly it is an object of the present invention to provide a container that mitigates at least some of the aforementioned disadvantages.

According to the present invention there is provided a container including a payload volume, a sensor for measuring an environmental condition within the payload volume, and a telecommunications device adapted to transmit data relating to the environmental condition measured by the sensor to a computerised monitoring system via a telecommunications network.

Advantageously the information received from the container can be monitored to establish whether it is necessary to intervene to prevent a condition within the payload from migrating outside the predetermined range of values. The intervention can prevent the payload from being damaged.

Preferably the payload volume is to be maintained within a predetermined temperature range and the sensor is arranged to measure the temperature within the payload volume.

Advantageously the container includes an external temperature sensor for measuring the ambient temperature.

Preferably the container includes a recorder device that is connected to the sensor and that is arranged to record data regarding the temperature in the payload volume over a period of time. Preferably the recorder device is connected to the external temperature sensor for recording the ambient temperature. The recording device can be arranged to calculate from the recorded temperature an estimate of the remaining lifetime of the products transported in the payload volume.

The telecommunications device is connected to the recorder device and is arranged to transmit data stored in the recorder device to the computerised monitoring system. Preferably the telecommunications device is a cellular telephonic device.

The container includes a switch device for deactivating the telecommunications device. The switch device is arranged to deactivate the telecommunications device in response to the detector device detecting an electrical system that operates within the predetermined parameters. The switch device is used to prevent operation of the telecommunications device when the container is loaded onto an aircraft or is in close proximity to an aircraft since operation of the telecommunications device can interfere with the avionic systems on the aircraft.

The switch device includes a detector device for detecting electrical systems that operate within predetermined parameters. Preferably the detector device is arranged to detect electrical systems having a frequency of approximately 400Hz.

Advantageously the switch device includes an inductance device arranged such that, in use, the electromagnetic field radiating from the electrical system in an aircraft induces an electrical signal in the inductance device. The inductance device includes a wire loop having a plurality of turns. Preferably the inductance device includes a plurality of loops wherein at least two loops are arranged substantially perpendicular to each other.

The detector device includes an electronic filter for filtering signals received from the inductance device. The detector device also includes an amplifier circuit for amplifying signals received from the detector device, and a rectifier circuit for rectifying the signal..

Advantageously the switch device includes a second detector device that is arranged to detect electrical systems having a frequency in the range 40 to 70Hz and that is arranged to inhibit operation of the switch device when such systems are detected. For example, the second detector device can be arranged to detect electrical systems having a frequency of approximately 45 to 65Hz, and preferably approximately 50Hz or 60Hz.

The second detector device includes a second electronic filter for filtering signals received from the inductance device, a second amplifier circuit for amplifying signals received from the inductance device, and a second rectifier circuit for rectifying the signal.

Advantageously the switch device includes a processor device for interpreting the signals received from at least one of the detector device and the second detector device. The processor device is arranged to send a deactivation signal to the telecommunications device when the detector device detects the presence of an electrical system having a frequency within the predetermined range and the second detector device does not detect the presence of an electrical system having a frequency within the predetermined range.

The processor device is arranged not to send a deactivation signal to the telecommunications device when the detector device detects the presence of an electrical system having a frequency within the predetermined range and the second detector device detects the presence of an electrical system having a frequency within the predetermined range.

The telecommunications device remains operational when no aircraft electrical system is detected.

Alternatively, the processor device is arranged to send a deactivation signal to the telecommunications device when the detector device detects the presence of an electrical system having an electrical signal with a frequency within the predetermined range.

Advantageously the switch device can include an acceleration sensor for detecting at least one of acceleration and deceleration. Preferably the acceleration sensor is arranged to sense accelerations / decelerations of the order of magnitude of an aircraft taking off and landing.

Advantageously the switch device can include a pressure sensor. Preferably the pressure sensor is arranged to detect changes in air pressure to indicate that the container is airborne.

The acceleration and pressure sensors are preferably connected to the processor device and are alternative means of detecting that the container is on an aircraft. The processor device can be arranged to send a deactivation signal to the telecommunications device if the acceleration sensor detects an acceleration / deceleration of a predetermined value. The processor device can be arranged to send a deactivation signal to the telecommunications device if the pressure sensor detects an air pressure of a predetermined value. The processor device can be arranged to send a deactivation signal to the telecommunications device based on suitable logic combinations of signals received by the detector device, the second detector device, the acceleration sensor and the pressure sensor.

Advantageously the container may include position locating equipment. Preferably the container includes Global Positioning Equipment that is connected to the telecommunications device such that data relating to the position of the container can be transmitted to the computer monitoring system.

Preferably the container has the form of a sealable, thermally insulated box. The container may include at least one heat reservoir that, in use, is arranged to cool the contents of the payload volume. The container may include at least one heat reservoir that, in use, is arranged to heat the contents of the payload volume. Preferably the heat reservoir includes a substance that changes state during use to liberate or absorb heat. For example, the heat reservoir can include a first substance for absorbing heat during use from the payload volume, and/or a second substance that liberates heat during use to the payload volume. In one embodiment the heat reservoir includes a first substance that changes state during use to liberate heat, and a second substance that changes state during use to absorb heat. The container may also include means for controlling the flow of heat to or from the heat reservoir to the payload volume.

According to another aspect of the present invention there is provided a switch device suitable for deactivating a telecommunications device when located on-board or in close proximity to an aircraft, including a detector means for detecting the presence of an aircraft, and a processor device for processing signals received from the detector means and arranged to generate a deactivation signal to prevent operation of the telecommunications device in response to an output signal from the detector means.

The switch device is used to prevent operation of the telecommunications device when the container is loaded onto an aircraft or is in close proximity to an aircraft, and in particular when loaded on to an aeroplane.

Advantageously the detector means includes a detector device for detecting electrical systems that operate within predetermined parameters. Preferably the detector device is arranged to detect electrical systems having a frequency of approximately 400Hz.

The detector means includes an inductance device arranged such that, in use, the electromagnetic field radiating from the electrical system induces an electrical signal in the inductance device. Preferably the detector device includes an electronic filter for filtering signals received from the inductance device, an amplifier circuit for amplifying the signals received and a rectifier circuit for rectifying the signals received.

Advantageously the detector means includes a second detector device that is arranged to detect electrical systems with a frequency in the range 40 to 70Hz. Preferably the second detector device is arranged to detect electrical systems having a frequency of approximately 45 to 65Hz, and preferably approximately 50Hz or 60Hz.

Preferably the second detector device includes a second electronic filter for filtering signals received from the second detector device, a second amplifier circuit for amplifying signals received from the second detector device, and a second rectifier circuit for rectifying the signal.

The processor device is arranged to send a deactivation signal to the telecommunications device when the detector device detects the presence of an electrical system having a frequency within the predetermined range and the second detector device does not detect the presence of an electrical system having a frequency within the predetermined range.

Preferably the processor device is arranged not to send a deactivation signal to the telecommunications device when the detector device detects the presence of an electrical system having a frequency within the predetermined range and the second detector device detects the presence of an electrical system having a frequency within the predetermined range.

The telecommunications device remains operational when no aircraft electrical system is detected.

Alternatively the processor device is arranged to send a deactivation signal to the telecommunications device when the detector device detects the presence of an electrical system having a frequency within the predetermined range.

Advantageously the detector means can include an acceleration sensor for detecting at least one of acceleration and deceleration. Preferably the acceleration sensor is arranged to sense accelerations / decelerations of the order of magnitude of an aircraft taking off and landing.

Advantageously the detector means can include a pressure sensor.

An embodiment of the invention will now be described with reference to the accompanying drawings by way of example only, in which:
Figure 1 is a perspective view of a thermally insulated container;

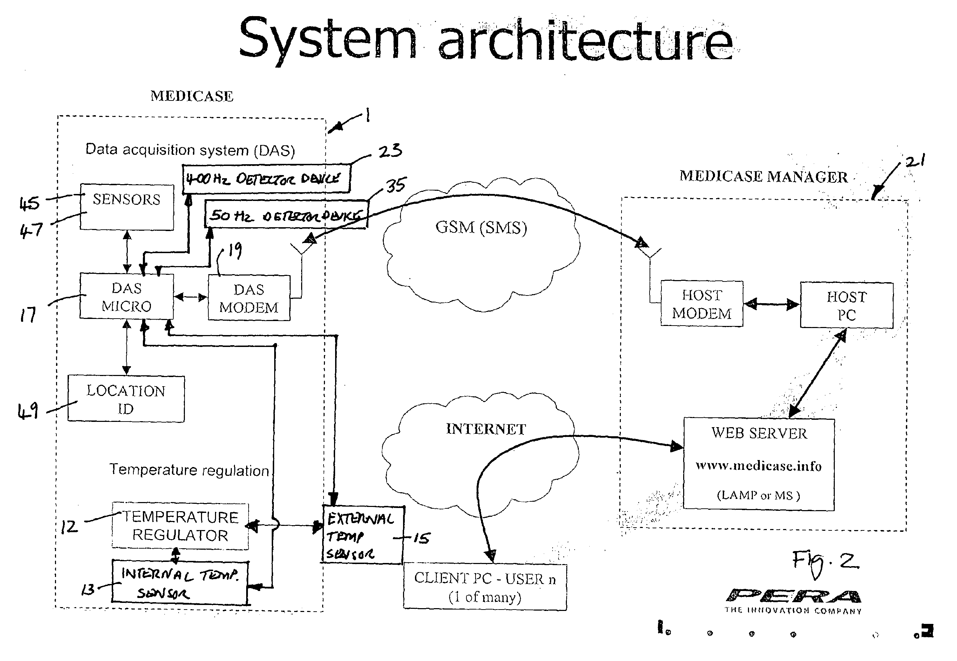

Figure 2 is a schematic view of the container of figure 1, a telecommunications network and a computerised monitoring system;
Figure 3a is schematic view of a switch device;
Figure 3b is a logic table relating to the output of the switch device of figure 3a;
Figure 4 is a circuit diagram of switch device of figure 3a; and
Figure 5 is a graph showing the frequency response of a 400Hz Band Pass Filter.

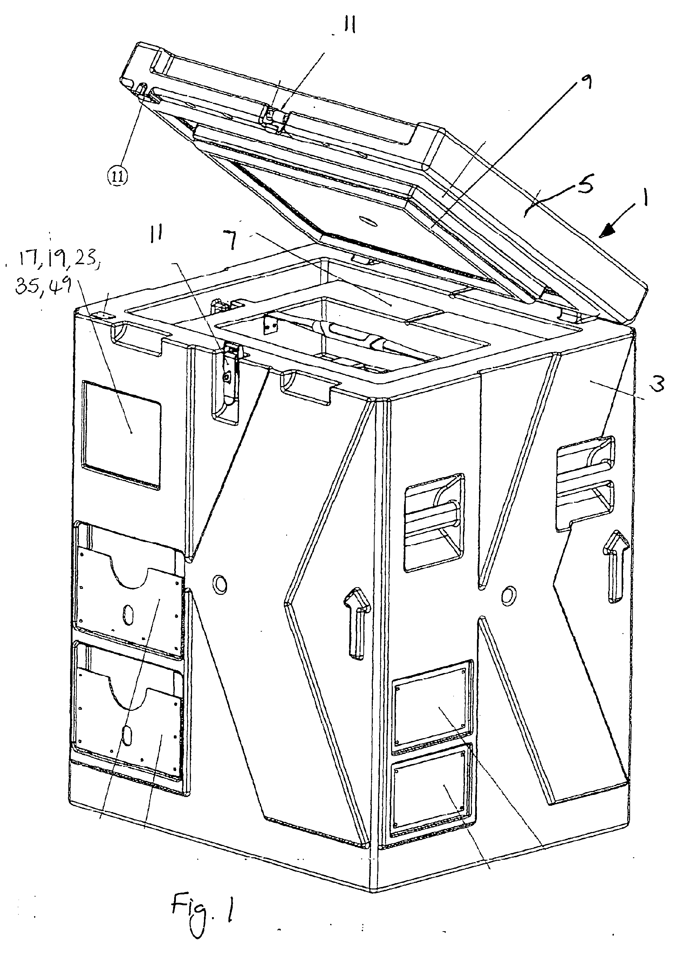

Figure 1 shows a thermally insulated container 1. The container 1 is designed specifically for use in transporting goods that must be maintained at a temperature of between +2°C and +8°C, such as, for example, vaccines and transplant organs. Containers for different temperatures will be generally similar in construction, but may be modified to maintain the required temperatures. For example, for some applications the internal temperature must be maintained in the range +20°C to + 31°C whereas for other applications, the internal temperature must be maintained at approximately -80°C.

The container 1 includes a main body 3 that has a casing that includes an outer shell of, for example, glass reinforced plastic (GRP), metal or a plastics material such as polyethylene. The casing has an inner liner of insulating materials with a very high K value such as polystyrene, for example a foamed plastics material. The container 1 includes a hinged lid 5 that has a sealing fit with the body 3 of the container, and has a similar construction to the body 3. The container 1 includes a coolant tray 7 arranged to receive a quantity of coolant, a gasket 9 attached to the underside of the lid to seal the coolant tray 7 and a lock mechanism 11 for securing the lid 5 against the body 3 of the container.

Beneath the coolant tray 7 there is provided a payload volume. In use, the payload is located in the payload volume and a coolant such as dry ice is added to the coolant tray 7. Alternatively coolants such as alcohol base coolants can be used, or any other suitable coolant having suitable thermal mass or eutectic properties. The coolant acts as a heat reservoir that absorbs heat from the payload volume to keep the payload within the predetermined temperature range. If the container 1 is to operate in cold environments the container 1 may include a second heat reservoir arrange to supply heat to the payload volume to maintain the temperature in the payload volume within the temperature range. The container 1 can include a combination of relatively hot and cold heat reservoirs and means for controlling the flow of heat to and from those reservoirs, such as a temperature regulator 12.

The container 1 may for example be substantially as described in WO 01/02268, the content of which is incorporated by reference herein, and may be arranged as described in that document for the purposes of maintaining the temperature in the payload volume within a specified range.

The container 1 also includes an internal temperature sensor 13 for measuring the temperature in the payload volume, an external temperature sensor 15 for measuring the ambient temperature and a micro-computer 17 that is arranged to process and record data received from the temperature sensors 13,15. The container 1 also includes a telecommunications device 19 adapted to receive data from the micro-computer 17 and to send messages to a monitoring system 21 that includes data relating to the temperature in the payload volume and the ambient temperature. For example, the telecommunications device 19 can be a cellular telephonic device that is arranged to use a Short Message Service (SMS), a GSM data call service or a General Packet Radio System (GPRS) to send messages to the monitoring system 21.

The micro-computer 17 is arranged to maintain a record of the payload temperature and the external ambient temperature during the entire transit time. In the case of a container 1 that is to be used for transporting live cultures, the micro-computer 17 may be arranged to calculate from the temperatures recorded inside the container 1 the rate at which the nutrients inside the agar have been consumed and, from that information, calculate the estimated remaining lifetime of the culture. Similarly, if the container 1 is to be used for transporting vaccines, the micro-computer 17 can calculate the rate of degradation, thereby increasing confidence that the vaccine will not degrade unacceptably during transportation. All of the calculated data can be included in the message sent to the computerised monitoring system 21.

The micro-computer 17 can be arranged to record the payload volume and ambient temperatures periodically. For example, temperature readings can be taken every fifteen minutes. A message is sent by the telecommunications device 19 after temperature measurements have been made by both temperature sensors 13,15. Alternatively, a message can be sent by the telecommunications device 19 after a plurality of temperature measurements have been made to reduce the number of messages sent.

The micro-computer 17 further includes a switch system 22 for activating and deactivating the telecommunications device 19. If the container 1 is to be moved over a long distance there is a likelihood that the container 1 will be transported by aeroplane, for example in a baggage hold. However, operation of the telecommunications device 19 to transmit information to the monitoring system 21 may interfere with the aeroplane's navigation systems and aviation systems and it may therefore be necessary to temporarily de-activate the telecommunications device 19 to prevent messages being transmitted when the container 1 is on the aircraft. It is undesirable to perform this task manually since this would require a person to check each container 1 and locate the on/off switch. It would be easy to forget either to switch the telecommunications device 19 off or to switch it back on at the end of the flight. It is therefore desirable to have an automatic switch system.

The switch system 22 includes a first detector device 23 for detecting electromagnetic waves having a frequency in the range of 400Hz ± 24Hz. The first detector includes a 400Hz band pass filter circuit 27, an amplifier circuit 29, and a rectifier circuit 31. The majority of commercial aircraft include power supplies to supply the avionics and ancillary electrical equipment with an alternating electrical supply at a frequency of 400Hz ± 24Hz. It is unusual for other devices to operate within that frequency range and therefore it can be assumed when such a signal is detected that the container 1 has been loaded onto an aeroplane or is in close proximity to the aeroplane.

The switch system 22 includes an antenna 25 having multiple turns of copper wire, for example ninety turns. Preferably, the switch system 22 includes a plurality of antennas 25, with at least two of the antennas 25 being arranged substantially perpendicular to each other. This is to account for variation in the electromagnetic field strength in the aeroplane, since it is not possible to determine in what orientation the container 1 will be placed relative to the aircraft hold.

The electromagnetic waves generated by the electrical system of the aircraft induce a current in the antenna 25. The signal is filtered by the 400Hz band pass filter circuit 27, is amplified by the amplifier circuit 29, rectified by the rectifier circuit 31 and then input into a logic system 33.

The switch system 22 includes a second detector device 35. The detector device 35 uses the antenna 25 for detecting electromagnetic waves having a frequency of 55Hz ± 10Hz. This is to detect mains voltage electrical signals. The signal detected by the antenna 25 is filtered by a broad band pass filter circuit 37 in the range 45Hz to 65Hz, is amplified by an amplifier circuit 39 and is rectified by a rectifier circuit 41. The output of the rectifier circuit 41 is connected to the logic system 33. The broad band filter pass filter circuit 37 may alternatively be replaced by 50Hz or 60Hz band pass filter circuits.

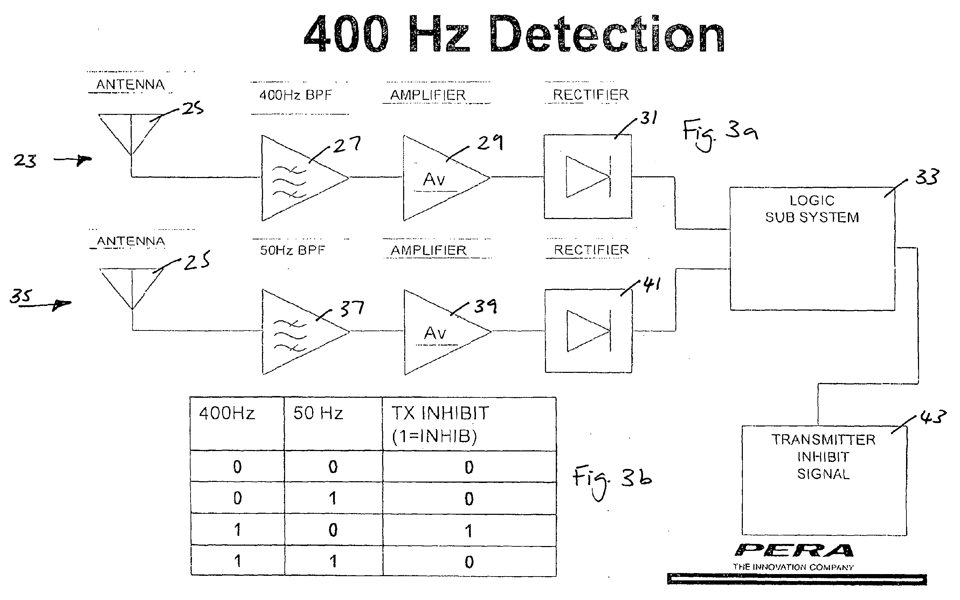

The logic system 33 outputs a telecommunications device inhibit signal 43 in accordance with the logic table shown in Figure 3b. If the first detector device 23 does not detect a signal having a frequency of approximately 400Hz ± 24Hz then no inhibit signal 43 is sent to the telecommunications device 19 and the telecommunications device 19 can operate normally. If the first detector device 23 detects a signal of approximately 400Hz ± 24Hz and the second detector 35 detects a signal having a frequency of approximately 55Hz ± 10Hz, no inhibit signal 43 is sent to the telecommunications device 19. This is because most aeroplanes do not include electric systems operating around 55Hz ± 10Hz (i.e. around a mains frequency). In this instance it is assumed that the container 1 is located close to an aeroplane but not actually loaded on the aeroplane. For example, the container 1 may be located in a warehouse within an airport perimeter and there may be an aeroplane in close proximity to the warehouse. The second detector device 35 can detect the mains signal from the warehouse and therefore the telecommunications device 19 is not switched off. If the first detector device 23 detects a signal of approximately 400Hz ± 24Hz and the second detector 35 does not detect a signal of approximately 55Hz ± 10Hz the logic system 33 sends an inhibit signal 43 to the telecommunications device 19 to prevent operation of the device.

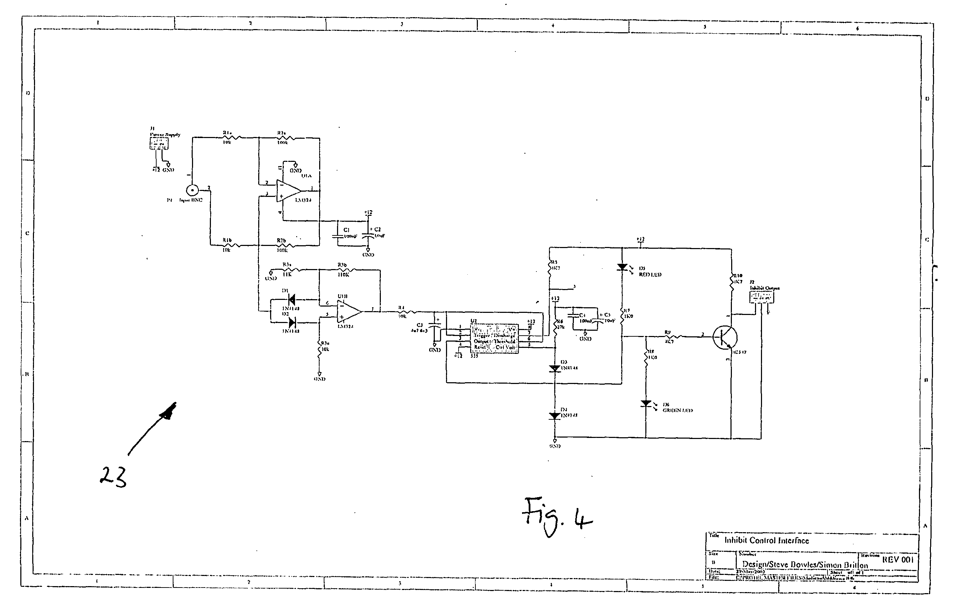

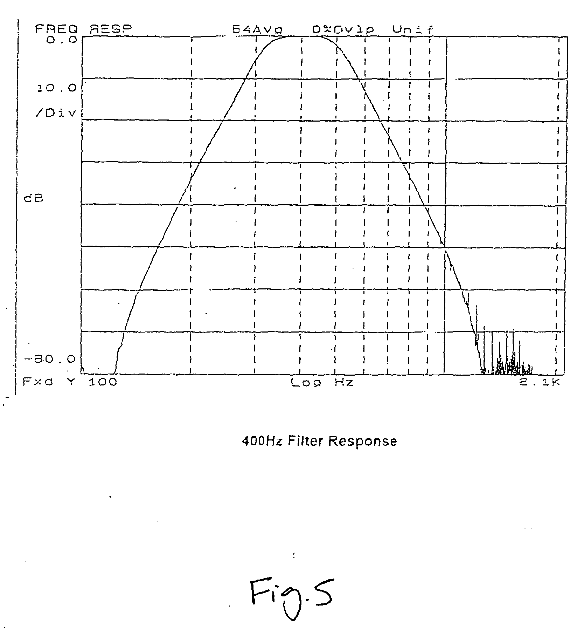

Figure 4 shows a circuit diagram of the first detector device 23. Figure 5 shows a graph of the frequency response of the 400Hz band pass filter circuit 27.

The switch system 22 can also include an acceleration sensor 45 and/or a pressure sensor 47. The acceleration sensor 45 is arranged to detect a pre-determined level of acceleration or deceleration over a predetermined period of time that corresponds with the order of magnitude of acceleration typically experienced when an aircraft is taking off or landing over a sustained period. The measurement is taken over a period of time to differentiate between aircraft and other vehicles. If an acceleration is detected having the pre-determined order of magnitude a signal is sent from the acceleration sensor 45 to the logic system 33. The pressure sensor 47 is arranged to detect air pressure. If the pressure sensor 47 detects an air pressure that falls below a pre-determined value, the pressure sensor 47 sends a signal to the logic system 33. The pressure sensor 47 is arranged to detect air pressures that would indicate that the aircraft is airborne. Preferably, the acceleration sensor 45 and pressure sensor 47 are back-up systems in case the first detector device 23 fails to detect a 400Hz ± 24Hz signal when located on an aircraft. The logic system 33 can be adapted to send an inhibit signal 43 when suitable combinations of signals are detected from the sensors 45,47 and detectors 23,35.

Thus the container 1 is able to transmit data regarding conditions within the payload volume to the monitoring system 21 when located anywhere other than on an aeroplane and is prevented from transmitting signals when located in the baggage hold of an aircraft. The monitoring system 21 can store the information in a database and can provide a user interface for the payload owners via the internet or via a telephonic interface.

From the data received by the monitoring system 21 it is possible to calculate whether the heat reservoir(s) has sufficient coolant or heating means to maintain the payload volume within the predetermined temperature range throughout the duration of the journey. If it is determined from the data that the heat reservoir(s) has insufficient capacity to maintain the temperature within the predetermined temperature range, for example because of a delayed flight, action can be taken to provide additional coolant or heating means to the heat reservoir(s). This will maintain the payload within the temperature range and prevent the payload from being damaged.

Calculations can be made by either the micro-computer 17 or the monitoring system 21 that take account of the duration of a flight or other journey to be made. For example, if the container 1 is held in a warehouse for longer than expected and the container 1 does not have sufficient coolant or heating means to keep the payload within the temperature range for the entire journey a warning message can be generated to alert the monitoring system 21 of the situation.

The container 1 can also include a position locating system 49 such as a Global Positioning System (GPS), cellular network positioning from the telecommunications device 19 or a radio frequency system. The position locating system 49 is connected to the micro-computer 17 and positional information can be transmitted to the monitoring system 21 via the telecommunications device 19. Use of a position locating system 49 will assist in finding the container 1 quickly in the event that maintenance has to be performed on the container 1.

The container 1 may also include sensors for monitoring the condition of the heat reservoir(s) and any power supply devices included in the container 1, such as electric cells.

It will be appreciated that some aircraft may have electrical systems having an operating frequency outside the range 400Hz ± 24Hz. For example, some aircraft may have electrical systems that have electrical signals having an operating frequency in that falls within the range 350Hz to 450Hz, 300Hz to 500Hz, or some other frequency range. The embodiment of the invention described above can be easily adapted to detect electrical signals having a frequency outside the 400Hz ± 24Hz range. Similarly, mains electrical systems in Europe typically have an operating frequency around 50Hz and in the US around 60Hz. The embodiment described above can easily be adapted to detect mains systems operating around those frequencies or can be adapted to detect mains systems operating at other frequencies.

The container 1 can be adapted to maintain other environmental conditions within the payload volume. For example, the container 1 may be adapted to maintain humidity within a predetermined range of values. The container 1 would then include a sensor for measuring humidity within the payload volume. Similarly, the container 1 could be adapted to maintain pressure within the payload volume within a predetermined range of values and would include a pressure sensor.

The switch system 22 can be adapted to be included in mobile phones, laptop computers or other electrical devices that may interfere with an aircraft's avionics systems to automatically temporally deactivate those devices.

## Claims

1. A container including a payload volume, a sensor for measuring an environmental condition within the payload volume, and a telecommunications device adapted to transmit data relating to the environmental condition measured by the sensor to a computerised monitoring system via a telecommunications network.

2. A container according to claim 1, including an external temperature sensor for measuring the ambient temperature

3. A container according to claim 1 or 2, including a recorder device that is connected to the sensor and that is arranged to record data regarding the temperature in the payload volume over a period of time.

4. A container according to claim 3, wherein the recording device is arranged to calculate from the recorded temperature the remaining lifetime of products transported in the payload volume.

5. A container according to claim 3 or 4, wherein the telecommunications device is connected to the recorder device and is arranged to transmit data stored in the recorder device to the computerised monitoring system.

6. A container according to any one of the preceding claims, wherein the telecommunications device is a cellular telephonic device.

7. A container according to any one of the preceding claims, including a switch device for deactivating the telecommunications device.

8. A container according to claim 7, wherein the switch device includes a detector device for detecting electrical systems that operate within predetermined parameters, the switch device being arranged to deactivate the telecommunications device in response to the detector device detecting an electrical system that operates within the predetermined parameters.

9. A container according to claim 8, wherein the detector device is arranged to detect electrical systems having a frequency of approximately 400Hz.

10. A container according to any one of claims 7 to 9, wherein the switch device includes a second detector device that is arranged to detect electrical systems having a frequency of approximately 50Hz or 60Hz, arranged to inhibit operation of the switch device when such a system is detected.

11. A container according to any one of claims 7 to 10, wherein the switch device includes a processor device for interpreting the signals received from at least one of the detector device and the second detector device.

12. A container according to any one of claims 7 to 11, wherein the switch device includes an acceleration sensor for detecting at least one of acceleration and deceleration.

13. A container according to any one of claims 7 to 12, wherein the switch device includes a pressure sensor.

14. A container according to any one of the preceding claims, including position locating equipment.

15. A container according to any one of the preceding claims, wherein the payload volume is thermally insulated.

16. A container according to any one of the preceding claims, including at least one heat reservoir that, in use, is arranged to cool or heat the contents of the payload volume.

17. A container according to claim 16, including means for controlling the flow of heat to or from the heat reservoir to the payload volume.

18. A switch device suitable for deactivating a telecommunications device when located on-board or in close proximity to an aircraft, including a detector means for detecting the presence of an aircraft, and a processor device for processing signals received from the detector means and arranged to generate a deactivation signal to prevent operation of the telecommunications device in response to an output signal from the detector means.

19. A switch device according to claim 18, wherein the detector means includes a detector device for detecting electrical systems that operate within predetermined parameters.

20. A switch device according to claim 19, wherein the detector device is arranged to detect electrical systems having a frequency of approximately 400Hz.

21. A switch device according to any one of claims 18 to 20, wherein the detector means includes a second detector device that is arranged to detect electrical systems with a frequency of approximately 50Hz or 60Hz.
